# EUROPÄISCHE PATENTANMELDUNG

(11) **EP 1 234 972 A2**
(43) Veröffentlichungstag der Anmeldung: **28.08.2002**
(21) Anmeldenummer: 01121418.6
(22) Anmeldetag: 07.09.2001
(51) Int. Cl.: F02D 41/30, F02D 41/14, F02D 33/02

(54) **Verfahren, Computerprogramme und Steuer- und/oder Regelgerät zum Betreiben einer Brennkraftmaschine sowie Brennkraftmaschine**

(30) Priorität: 21.02.2001 DE 10108220
(71) Anmelder: ROBERT BOSCH GMBH, 70442 Stuttgart (DE)
(72) Erfinder: Roth, Andreas, 75417 Muehlacker-Lomersheim (DE)

(57) **Zusammenfassung**

Bei einer Brennkraftmaschine wird der Kraftstoff direkt in einen Brennraum eingespritzt. Die Brennkraftmaschine wird mindestens zeitweise im Schichtbetrieb betrieben. Um eine falsche Kraftstoffbemessung und Momentenfehler im Schichtbetrieb zu vermeiden, wird vorgeschlagen, dass im Schichtbetrieb nach einer Einschwingzeit eine Differenz zwischen einer Ist-Drehzahl (n_ist) und einer Soll-Drehzahl (n_soll) erfasst und eine Gemischadaption (54) abhängig von dieser Differenz indirekt oder direkt durchgeführt wird.

## Beschreibung

### Stand der Technik

Die vorliegende Erfindung betrifft zunächst ein Verfahren zum Betreiben einer Brennkraftmaschine, bei dem der Kraftstoff direkt in einen Brennraum eingespritzt und mindestens zeitweise ein Schichtbetrieb durchgeführt wird.

Ein solches Verfahren ist vom Markt her bekannt. Bei der entsprechenden Brennkraftmaschine sitzt ein Einspritzventil direkt am Brennraum und spritzt den Kraftstoff während des Ansaug- und/oder Kompressionstaktes direkt in den Brennraum. Durch eine entsprechende Luftführung wird im Brennraum eine Schichtung des Kraftstoffes erzeugt, d.h. dass in einem Bereich des Brennraums ein relativ mageres und in einem anderen Bereich des Brennraums ein relativ fettes Gemisch vorhanden ist. Die Leistungssteuerung der Brennkraftmaschine erfolgt abhängig von einem Fahrer-Wunschmoment dadurch, dass eine mehr oder weniger große Menge an Kraftstoff in den Brennraum eingespritzt wird (es versteht sich, dass die entsprechende Brennkraftmaschine natürlich auch eine Mehrzahl von Brennräumen aufweisen kann).

Die Einspritzung des Kraftstoffes in den Brennraum erfolgt durch Hochdruck-Einspritzventile, welche im Allgemeinen elektromagnetisch betätigt werden. Die Menge des eingespritzten Kraftstoffes wird durch eine mehr oder weniger lange Öffnungsdauer der Einspritzventile eingestellt. Aufgrund von Fertigungsunterschieden bei den Einspritzventilen kann jedoch die tatsächlich eingespritzte Kraftstoffmenge von der dem Fahrer-Wunschmoment eigentlich entsprechenden Kraftstoffmenge abweichen. Auch ist es möglich, dass die sich im Brennraum befindliche Luftfüllung nicht der an sich geplanten Luftfüllung entspricht.

Um derartige Fehler bei der Kraftstoffbemessung bzw. der Luftfüllungsbemessung kompensieren zu können, wird bei dem bekannten Verfahren in einem Homogenbetrieb der Brennkraftmaschine, in dem das Kraftstoff-Luftgemisch in etwa stöchiometrisch mit einem Lambdawert von 1 sein soll, eine Abweichung des Ist-Lambdawerts vom Soll-Lambdawert erfasst und abhängig von dieser Abweichung eine Gemischadaption, beispielsweise eine Korrektur der Sollwerte für die Luftfüllung und/oder die Kraftstoffmenge, durchgeführt. Da die Messgenauigkeit des Sensors, der für die Ermittlung des Lambdawerts verwendet wird, im Bereich des üblicherweise nur im Homogenbetrieb auftretenden Lambdawerts 1 am größten ist, wird die im Homogenbetrieb der Brennkraftmaschine ermittelte Gemischadaption auf den Schichtbetrieb übertragen und auch in diesem angewandt.

Im Betrieb der Brennkraftmaschine wurde jedoch festgestellt, dass trotz der Gemischadaption die Gemischzusammensetzung im Schichtbetrieb nicht immer den erwarteten Werten entspricht und es daher auch zu Unterschieden zwischen dem gewünschten und dem tatsächlich geleisteten Drehmoment der Brennkraftmaschine kommt.

Die vorliegende Erfindung hat daher die Aufgabe, ein Verfahren der eingangs genannten Art so weiterzubilden, dass auch im Schichtbetrieb die Gemischzusammensetzung exakt bestimmt werden kann und Momentenfehler vermieden werden.

Diese Aufgabe wird bei einem Verfahren der eingangs genannten Art dadurch gelöst, dass im Schichtbetrieb eine Differenz zwischen einer Ist-Drehzahl und einer Soll-Drehzahl erfasst und eine Gemischadaption abhängig von dieser Differenz indirekt oder direkt durchgeführt wird.

### Vorteile der Erfindung

Erfindungsgemäß wurde festgestellt, dass bei der Gemischadaption im Homogenbetrieb nicht unterschieden werden kann, ob die Abweichung des Ist-Lambdawerts vom Soll-Lambdawert aufgrund eines Fehlers in der Berechnung der Luftfüllung oder aufgrund eines Fehlers in der Berechnung der Kraftstoffmasse herrührt. Die Gemischadaption erfolgt üblicherweise jedoch durch eine Korrektur bei der Berechnung der Einspritzzeit des Kraftstoffs, da dies technisch am einfachsten zu realisieren ist.

In der Folge wurde erkannt, dass dann, wenn die Lambda-Abweichung von einem Fehler bei der Berechnung der Luftfüllung herrührt und die Gemischadaption durch eine Korrektur der eingespritzten Kraftstoffmenge erfolgt, dies bei der Übertragung der Gemischadaption auf den Schichtbetrieb im Schichtbetrieb zu einer falschen Zumessung der Kraftstoffmasse führt, was wiederum einen Momentenfehler verursacht.

Dem wird bei der vorliegenden Erfindung dadurch begegnet, dass im Schichtbetrieb eine eigene Gemischadaption durchgeführt wird. Da im Schichtbetrieb jedoch die Gemischzusammensetzung eher mager ist und daher die Lambdasonde nicht in ihrem optimalen Genauigkeitsbereich (Lambda ungefähr gleich 1) arbeitet, erfolgt die Gemischadaption im Schichtbetrieb nicht auf der Basis einer Lambdaabweichung. Statt dessen wird als Größe für die Beurteilung der Gemischzusammensetzung die Drehzahl der Brennkraftmaschine herangezogen. Weicht die Ist-Drehzahl von einer Soll-Drehzahl ab, kann davon ausgegangen werden, dass die tatsächliche Gemischzusammensetzung nicht der erwarteten Gemischzusammensetzung entspricht. Ist die Ist-Drehzahl höher als die Soll-Drehzahl, ist das Gemisch fetter als erwartet, im umgekehrten Fall ist das Gemisch magerer als erwartet.

Auf diese einfache Art und Weise kann also auch im Schichtbetrieb eine Gemischadaption durchgeführt und hierdurch das tatsächliche Gemisch an das erwartete Gemisch angepasst werden. Gemischfehler im Schichtbetrieb können auf diese Weise zuverlässig vermieden werden.

Vorteilhafte Weiterbildungen der Erfindung sind in Unteransprüchen angegeben.

In einer ersten Weiterbildung wird vorgeschlagen, dass die Gemischadaption im Schichtbetrieb indirekt, nämlich abhängig von einer Regelgröße einer Drehzahlregelung erfolgt. Diese Weiterbildung des erfindungsgemäßen Verfahrens beruht auf dem Gedanken, dass eine Abweichung der Ist-Drehzahl von einer Soll-Drehzahl im realen Betrieb einer Brennkraftmaschine nach Möglichkeit verhindert werden soll, was im Allgemeinen durch eine Drehzahlregelung geschieht. Um eine Drehzahlabweichung aufgrund eines Gemischfehlers auszuregeln, wird in der Drehzahlregelung jedoch eine Regelgröße erzeugt, welche wiederum als Ausgangsgröße für die Gemischadaption im Schichtbetrieb herangezogen werden kann. Die Gemischadaption kann auf diese Weise erfolgen, ohne dass vom Benutzer Drehzahlunterschiede in Kauf genommen werden müssen.

Dabei wird wiederum besonders bevorzugt, wenn die Gemischadaption im Schichtbetrieb indirekt, nämlich abhängig von einem I-Anteil eines PI-Reglers zur Drehzahlregelung erfolgt.

Der I-Anteil eines PI-Reglers zur Drehzahlregelung ist im Hinblick auf sonstige Störeinflüsse, welche die Drehzahl beeinflussen können, wie z.B. das Ein- und Ausschalten von elektrischen Verbrauchern, relativ unempfindlich. Gegebenenfalls kann die Sicherheit bei der Gemischadaption nochmals dadurch erhöht werden, dass der I-Anteil des PI-Reglers nochmals einem Integrator zugeführt wird, bevor er für die Gemischadaption verwendet wird.

Alternativ ist es möglich, dass die Gemischadaption direkt, nämlich abhängig von einer tatsächlichen Drehzahldifferenz, erfolgt. Diese Weiterbildung ist besonders einfach zu realisieren. Gegebenenfalls kann sie auch nur während einer Wartung in einer Werkstatt erfolgen.

Die Regelgröße bzw. die Drehzahldifferenz kann als Kraftstofffehler interpretiert werden. Dies bietet sich im Schichtbetrieb an, da in diesem üblicherweise mit einer maximalen Luftfüllung gearbeitet wird und die Leistung der Brennkraftmaschine vorwiegend durch die Bemessung der Kraftstoffmenge erfolgt. Bei einer Differenz zwischen Soll-Drehzahl und Ist-Drehzahl kann daher davon ausgegangen werden, dass die Ursache hierfür nicht in einer fehlerhaften Bemessung der Luftfüllung, sondern in einer fehlerhaften Bemessung der Kraftstoffmenge zu finden ist. Das erfindungsgemäße Verfahren ermöglicht es daher, einem Gemischfehler eine eindeutigen Ursache zuzuordnen.

Dabei wird besonders bevorzugt, dass aus der Drehzahldifferenz bzw. der Regelgröße eine Korrekturgröße für die Ermittlung der Kraftstoffmenge bestimmt wird. Hierdurch wird erreicht, dass die der Leistungsanforderung des Benutzers und dem Betriebszustand der Brennkraftmaschine entsprechende Kraftstoffmenge auch tatsächlich in den Brennraum der Brennkraftmaschine eingespritzt wird, sodass ein Momentenfehler zuverlässig verhindert wird.

In einer anderen Weiterbildung des erfindungsgemäßen Verfahrens ist vorgesehen, dass zeitweise auch ein Homogenbetrieb durchgeführt und im Homogenbetrieb bei einer Lambdaabweichung eine Gemischadaption durchgeführt wird, wobei die Lambdaabweichung im Homogenbetrieb als Luftfüllungsfehler interpretiert wird. Bei dieser besonders bevorzugten Weiterbildung wird im Homogenbetrieb, in dem die Brennkraftmaschine mit einem Gemisch betrieben wird, dessen Zusammensetzung von der Lambdasonde mit besonders hoher Genauigkeit erfasst werden kann, eine Gemischadaption durchgeführt, die auf einem von der Lambdasonde registrierten Gemischfehler basiert. Per Definition wird dabei davon ausgegangen, dass eine Lambdaabweichung, also ein Gemischfehler, im Homogenbetrieb als Ursache einen Luftfüllungsfehler hat.

Dabei wird besonders bevorzugt, dass aus der Lambdaabweichung eine Korrekturgröße für die Ermittlung der Luftmenge bestimmt wird.

In der besonders bevorzugten Weiterbildung des erfindungsgemäßen Verfahrens wird vorgeschlagen, dass abwechselnd im Sinne einer iterativen Schleife eine Gemischadaption im Homogenbetrieb und eine Gemischadaption im Schichtbetrieb durchgeführt wird. Insbesondere dann, wenn die Drehzahldifferenz bzw. die Regelgröße im Schichtbetrieb als Kraftstofffehler interpretiert wird, kann mit dieser Weiterbildung relativ genau einerseits der Kraftstofffehler und andererseits der Luftfüllungsfehler ermittelt werden. Somit kann in jedem Betriebszustand der Brennkraftmaschine, also im Schichtbetrieb und im Homogenbetrieb, eine optimale Gemischadaption erfolgen.

Besonders bevorzugt ist es, wenn es sich bei der Soll-Drehzahl um eine Leerlaufdrehzahl handelt. Bei dieser Drehzahl steht oftmals eine ausreichend lange Zeit zur Verfügung, um die für die Gemischadaption erforderlichen Messungen bzw. Berechnungen mit hoher Genauigkeit durchzuführen. Auch handelt es sich hierbei um einen Betriebszustand, in dem eine feste Drehzahl für die Brennkraftmaschine vorgegeben ist. Somit kann die Drehzahldifferenz bzw. die Regelgröße besonders einfach bestimmt werden. Aufgrund der niedrigen Drehzahl im Leerlauf ist darüber hinaus der Einschwingvorgang kurz und wenig ausgeprägt, sodass schnell stabile Verhältnisse vorliegen, welche eine genaue Ermittlung der Drehzahldifferenz bzw. der Regelgröße ermöglichen.

Im Zusammenhang mit einer direkteinspritzenden Brennkraftmaschine, bei der die Kraftstoffeinspritzventile als Piezo-Hochdruckeinspritzventile ausgebildet sind, wird bevorzugt aus der zuvor bestimmten Drehzahldifferenz bzw. der Regelgröße eine Korrekturgröße für die Ansteuerspannung der Piezo-Hochdruckeinspritzventile bestimmt. Durch diese erfindungsgemäße Korrektur der Ansteuerspannung wird eine gleichmäßige, dem Fahrerwunsch entsprechende, Kraftstoffmenge in die Brennräume eingespritzt.

Vorgeschlagen wird auch, dass die Gemischadaption eine Steigung und/oder einen Offset einer Beziehung beeinflusst, mit der die Kraftstoffmenge und/oder die Luftmenge bestimmt werden. Ferner kann die Korrektur im Schichtbetrieb auch eine Adaption eines Verlustmoments umfassen.

Die Erfindung betrifft auch ein Computerprogramm, welches zur Durchführung des obigen Verfahrens geeignet ist, wenn es auf einem Computer ausgeführt wird. Dabei wird besonders bevorzugt, dass das Computerprogramm auf einem Speicher, insbesondere auf einem Flash-Memory, abgespeichert ist.

Weiterhin betrifft die Erfindung ein Steuer- und/oder Regelgerät zum Betreiben einer Brennkraftmaschine, insbesondere eines Kraftfahrzeugs, bei der der Kraftstoff direkt in einen Brennraum eingespritzt und mindestens zeitweise ein Schichtbetrieb durchgeführt wird. Um auch im Schichtbetrieb das Soll-Gemisch optimal einstellen zu können und um Momentenfehler zu vermeiden, wird vorgeschlagen, dass das Steuer- und/oder Regelgerät zur Steuerung und/oder Regelung des oben genannten Verfahrens geeignet ist. Dabei wird besonders bevorzugt, dass das Steuerund/oder Regelgerät mit einem Computerprogramm der oben genannten Art versehen ist.

Die Erfindung betrifft schließlich auch eine Brennkraftmaschine mit mindestens einem Brennraum, mit einer Einrichtung, welche den Kraftstoff direkt in den Brennraum einspritzt, mit einer Einrichtung, mit der die Gemischzusammensetzung des Kraftstoff-Luftgemisches ermittelt werden kann, und mit einer Einrichtung zur Erfassung der Drehzahl der Brennkraftmaschine.

Damit diese Brennkraftmaschine auch im Schichtbetrieb optimal betrieben werden kann und genau das gewünschte Drehmoment erzeugt, wird vorgeschlagen, dass sie mit einem Steuer- und/oder Regelgerät der oben genannten Art versehen ist.

Nachfolgend wird ein Ausführungsbeispiel der Erfindung unter Bezugnahme auf die beiliegende Zeichnung im Detail erläutert. In der Zeichnung zeigen:
- Figur 1: ein Blockschaltbild einer Brennkraftmaschine;
- Figur 2: ein Funktionsbild der Durchführung der Gemischadaption im Betrieb der Brennkraftmaschine von Figur 1;
- Figur 3: ein Flussdiagramm, in dem die Durchführung der Gemischadaption von Figur 2 dargestellt ist.

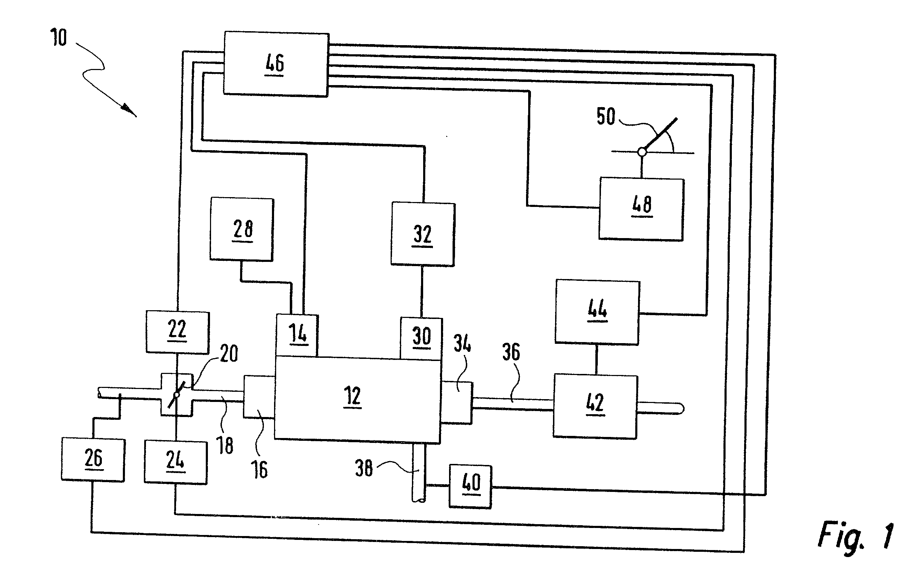

In Figur 1 trägt eine Brennkraftmaschine insgesamt das Bezugszeichen 10. Sie umfasst einen Brennraum 12, dem Kraftstoff direkt über ein Hochdruck-Einspritzventil 14 zugeführt wird. Verbrennungsluft wird dem Brennraum 12 über ein Einlassventil 16 zugeführt, welches von einem Saugrohr 18 gespeist wird. Die durch das Saugrohr 18 strömende Luftmenge kann von einer Drosselklappe 20 eingestellt werden, welche von einem Stellmotor 22 bewegt wird und deren Stellung von einem Stellungsgeber 24 abgegriffen wird. Die durch das Saugrohr 18 strömende Luftmenge wird von einem Heißfilm-Luftmassenmesser (kurz "HFM-Sensor" genannt) gemessen, welcher das Bezugszeichen 26 trägt.

Der Kraftstoff wird dem Hochdruckeinspritzventil 14 durch ein Kraftstoffsystem 28 zugeführt, welches dem Hochdruckeinspritzventil 14 den Kraftstoff mit hohem Druck bereitstellt. Hierzu ist eine in der Figur nicht dargestellte Kraftstoff-Sammelleitung vorgesehen, die auch als "Rail" bezeichnet wird. Im Brennraum 12 wird auf hier nicht näher dargestellte Weise ein Kraftstoff-Luftgemisch gebildet, welches durch eine Zündkerze 30 gezündet wird. Die Zündkerze 30 wird von einem Zündsystem 32 angesteuert. Die heißen Verbrennungsabgase verlassen den Brennraum 12 durch ein Auslassventil 34 und ein Abgasrohr 36. Die Drehzahl einer Kurbelwelle 38 wird von einem Drehzahlsensor 40 abgegriffen.

Im Abgasrohr 36 befindet sich ein Katalysator 42. Eine Lambdasonde 44 ermöglicht die Bestimmung der Zusammensetzung des Kraftstoff-Luftgemisches im Brennraum 12.

Die Brennkraftmaschine 10 umfasst auch ein Steuer- und Regelgerät 46, welches eingangsseitig mit einem Stellungssensor 48 eines Gaspedals 50 verbunden ist. Weiterhin ist das Steuerund Regelgerät 46 eingangsseitig mit der Lambdasonde 44, dem Drehzahlsensor 40, dem Stellungssensor 24 der Drosselklappe 20 und dem HFM-Sensor 26 verbunden. Ausgangsseitig liefert das Steuer- und Regelgerät 46 Signale für die Zündanlage 32, das Hochdruckeinspritzventil 14 sowie den Stellmotor 22 für die Drosselklappe 20.

Es sei an dieser Stelle darauf hingewiesen, dass, obwohl in Figur 1 jeweils nur ein Brennraum 12, ein Hochdruckeinspritzventil 14, ein Einlassventil 16, ein Auslassventil 34 und eine Zündkerze 30 dargestellt sind, von jeder dieser Komponenten mehrere vorhanden sein können. Die Beschränkung auf jeweils nur eine Komponente hat ausschließlich darstellungstechnische Gründe.

Die in Figur 1 dargestellte Brennkraftmaschine wird folgendermaßen betrieben:

Die vom Stellungssensor 48 des Gaspedals 50 übermittelten Signale werden vom Steuer- und Regelgerät 46 als Fahrer-Wunschdrehmoment interpretiert. Abhängig von diesem Fahrer-Wunschdrehmoment, bestimmten Betriebsparametern der Brennkraftmaschine 10 wie z.B. deren Temperatur, der Temperatur der Ansaugluft, etc., sowie der Drehzahl, welche vom Drehzahlsensor 40 an der Kurbelwelle 38 abgegriffen wird, wird vom Steuer- und Regelgerät 46 das Hochdruckeinspritzventil 14, der Stellmotor 22 der Drosselklappe 20 und die Zündanlage 32 angesteuert.

Bei niedrigen Drehzahlen und Drehmomenten arbeitet die Brennkraftmaschine 10 im Schichtbetrieb. Dies bedeutet, dass die Drosselklappe 20 vollständig geöffnet ist und durch eine entsprechende Ansteuerung des Hochdruckeinspritzventils 14 sowie gegebenenfalls noch anderer Einrichtungen im Brennraum 12 eine geschichtete Kraftstoff-Luftmischung erzeugt wird. Das auf diese Weise im Brennraum 12 erzeugte Gemisch ist insgesamt mager. Bei höheren Drehzahlen und Drehmomenten dagegen arbeitet die Brennkraftmaschine 10 im Homogenbetrieb. In diesem liegt das Kraftstoff-Luftgemisch im Brennraum 12 in homogener Form vor, und das Gemisch ist im Wesentlichen stöchiometrisch mit einem Lambdawert von ungefähr 1.

Der gewünschte Lambdawert wird im Homogenbetrieb durch eine entsprechende Ansteuerung des Hochdruckeinspritzventils 14 sowie eine entsprechende Ansteuerung des Stellmotors 22 der Drosselklappe 20 und eine mehr oder weniger offene Stellung der Drosselklappe 20 erzeugt. Die entsprechenden Stellgrößen für das Hochdruckeinspritzventil 14 sowie für den Stellmotor 22 der Drosselklappe 20 werden im Steuer- und Regelgerät 46 berechnet. Die Regelung der Luftfüllung erfolgt dabei unter Hinzuziehung der Signale, die vom HFM-Sensor 26 geliefert werden.

Aus verschiedenen Gründen kann jedoch die Erfassung der Luftmasse im Saugrohr 18 durch den HFM-Sensor 26 nur mit einer begrenzten Genauigkeit erfolgen. So besitzt z.B. der HFM-Sensor 26 aufgrund von Fertigungstoleranzen nur eine begrenzte Genauigkeit. Darüber hinaus können auch Leckagen im Saugrohr 18 sowie Sekundärströmungen im Saugrohr 18 aufgrund von Hilfsaggregaten zu einer tatsächlichen Luftfüllung im Brennraum 12 führen, welche nicht der gewünschten Luftfüllung entspricht. Eine solche Abweichung der tatsächlichen Luftfüllung von einer gewünschten Luftfüllung im Brennraum 12 wird als Luftfüllungsfehler bezeichnet.

Aber auch die tatsächlich in den Brennraum 12 gelangende Kraftstoffmenge kann von der gewünschten und vom Steuer- und Regelgerät 46 an sich berechneten Kraftstoffmenge abweichen. Ursache hierfür können z.B. Fertigungstoleranzen des Hochdruckeinspritzventils 14 sein. Darüber hinaus ist das Öffnungs- und Schließverhalten von Hochdruckeinspritzventilen 14 auch temperaturabhängig, was je nach Betriebstemperatur der Brennkraftmaschine 10 ebenfalls zu den genannten Unterschieden führen kann. Eine solche Abweichung des tatsächlichen in den Brennraum 12 gelangenden Kraftstoffs von der gewünschten bzw. vom Steuer- und Regelgerät 46 berechneten Kraftstoffmenge wird als Kraftstofffehler bezeichnet.

Um dennoch im Brennraum 12 ein optimales Kraftstoff-Luftgemisch bereitstellen zu können, wird bei der Brennkraftmaschine 10 eine Gemischadaption durchgeführt. Diese Gemischadaption erfolgt bei der Brennkraftmaschine 10 folgendermaßen:

Im Leerlauf der Brennkraftmaschine 10 wird nach einer kurzen Einschwingzeit zur Erzielung eines stationären Betriebszustands im Homogenbetrieb über die Lambdasonde 44 die Ist-Gemischzusammensetzung erfasst und mit einer Soll-Gemischzusammensetzung verglichen. Da im Homogenbetrieb der Lambdawert immer im Bereich von ungefähr 1 liegt und die Lambdasonde 44 in diesem Bereich ihre höchste Präzision hat, ist diese Messung mit hoher Genauigkeit möglich. Eine Abweichung des Ist-Lambdawertes von dem Soll-Lambdawert wird dabei als Luftfüllungsfehler interpretiert. Zur Kompensation der Lambdaabweichung wird ein im Steuergerät 46 vorhandenes Signal für die relative Luftmasse so beeinflusst, dass die gewünschte Gemischzusammensetzung bzw. der gewünschte Lambdawert erreicht wird.

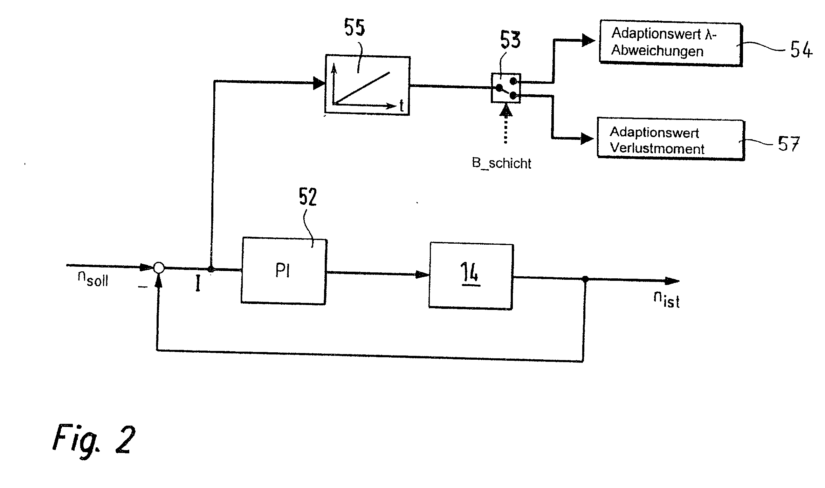

Bei niedrigem Druck im Saugrohr 18 machen sich Leckluft und Fehler eines Tankentlüftungsventils (in Figur 1 nicht dargestellt) besonders stark bemerkbar. In diesem Falle wird also ein "Offset" einer Beziehung beeinflusst, mit der die Luftfüllung bestimmt wird (aus der korrigierten Luftfüllung wird dann wiederum die entsprechende Kraftstoffmenge berechnet, die sich wiederum auf die Öffnungszeit des Hochdruckeinspritzventils 14 auswirkt). Bei höherer Last und Drehzahl verschwindet der Einfluss der Leckluft. Der Luftfehler wird dann hauptsächlich durch den Fehler des HFM-Sensors 26 bestimmt. In diesem Fall wird also eine Steigung einer Beziehung beeinflusst, mit der die Luftfüllung bestimmt wird. Auch eine Beeinflussung von Offset und Steigung ist möglich. Bisher wurde die Gemischadaption im Homogenbetrieb der Brennkraftmaschine 10 beschrieben. Im Schichtbetrieb der Brennkraftmaschine 10 erfolgt die Gemischadaption folgendermaßen (vgl. auch Figur 2) :

Nach einer Adaption der Verlustmomente im Homogenbetrieb wird im Leerlauf, ebenfalls nach einer kurzen Einschwingzeit zur Erzielung stationärer Betriebsverhältnisse, im Schichtbetrieb der Integralanteil I einer PI-Regelung 52 erfasst, mit der die Leerlaufdrehzahl auf eine bestimmte Größe n_soll gehalten werden soll. Die PI-Regelung 52 beeinflusst die Öffnungszeit des Hochdruckeinspritzventils 14, sodass sich eine tatsächliche Drehzahl nist der Kurbelwelle 38 der Brennkraftmaschine 10 ergibt. Die Drehzahl nist wird im Sinne einer geschlossenen Regelstrecke zurückgeführt. Da im Schichtbetrieb die Drosselklappe 20 vollständig geöffnet ist und die Luftfüllung zur Leistungseinstellung nicht herangezogen wird und da von einer eingeschwungenen Adaption der Verlustmomente ausgegangen werden kann, kann eine Abweichung der Ist-Drehzahl n_ist von der Soll-Drehzahl nsoll als ein Kraftstofffehler interpretiert werden.

Da von der PI-Regelung 52 jedoch die Leerlaufdrehzahl im Wesentlichen konstant gehalten wird, wird im Schichtbetrieb (in diesem ist ein Bit B_SCHICHT gesetzt, wodurch ein Schalter 53 entsprechend beeinflusst wird) der Integralanteil I für die Durchführung der Gemischadaption (Block 54) verwendet. Dies bedeutet, dass die Drehzahldifferenz "indirekt" zur Gemischadaption herangezogen wird. Abhängig vom I-Anteil des PI-Reglers 52 wird mittels einer Kennlinie (Block 55) eine Korrekturgröße (Steigung oder Offset, analog zum Homogenbetrieb) für die Ermittlung der Kraftstoffmenge bestimmt. Auf diese Weise kann also auch im Schichtbetrieb der Brennkraftmaschine 10 eine sichere und optimale Gemischadaption durchgeführt werden. Ist das Bit B_SCHICHT nicht gesetzt, wird der mittels der Kennlinie 55 bestimmte Wert als Adaptionswert für das Verlustmoment verwendet (Block 57).

Wie oben ausgeführt wurde, ist die Luftfüllung im Schichtbetrieb im Brennraum 12 der Brennkraftmaschine 10 immer maximal, sodass die Drehzahldifferenz bzw. der I-Anteil des PI-Reglers 52 immer als Kraftstofffehler interpretiert werden kann. Im Homogenbetrieb dagegen wurde die Lambdaabweichung zwar als Luftfüllungsfehler interpretiert, es kann jedoch nicht ausgeschlossen werden, dass die Lambdaabweichung in Wirklichkeit auf einem Kraftstofffehler basiert. Daher wird bei der vorliegenden Brennkraftmaschine 10 nach der Gemischadaption im Schichtbetrieb wieder eine Gemischadaption im Homogenbetrieb durchgeführt, wobei die im Schichtbetrieb bestimmte Gemischadaption aufgrund eines Kraftstofffehlers auch im Homogenbetrieb verwendet wird. Bei der nun folgenden Gemischadaption im Homogenbetrieb wird also der im Schichtbetrieb ermittelte Kraftstofffehler berücksichtigt, was dazu führt, dass bei dieser Gemischadaption der Luftfüllungsfehler mit erheblich größerer Genauigkeit ermittelt werden kann und daher die Gemischadaption eine bessere Qualität aufweist.

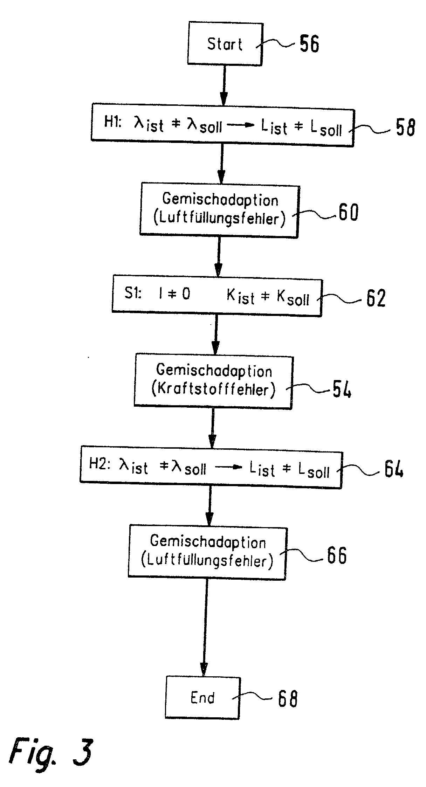

Optimal wird die Gemischadaption dann, wenn abwechselnd im Sinne einer iterativen Schleife eine Gemischadaption im Homogenbetrieb und eine Gemischadaption im Schichtbetrieb durchgeführt wird. Ein solches Verfahren, welches als Computerprogramm im Steuerund Regelgerät 46 abgelegt ist, ist in Figur 3 dargestellt:

Das Verfahren beginnt in einem Startblock 56. Zunächst wird im Leerlauf in einem Homogenbetrieb H1 eine Abweichung der tatsächlichen Gemischzusammensetzung λ_ist von einer Soll-Gemischzusammensetzung λ_soll festgestellt. Eine Gemischabweichung wird als Luftfüllungsfehler interpretiert, d.h., es wird davon ausgegangen, dass die tatsächlich Luftfüllung L_ist nicht der gewünschten Luftfüllung L_soll entspricht. Dies ist im Block 58 dargelegt.

Nun erfolgt im Block 60 eine Gemischadaption des Luftfüllungsfehlers. Wie bereits oben ausgeführt worden ist, wird bei dieser Gemischadaption eine Steigung und ein Offset einer Beziehung beeinflusst, mit der die Luftfüllung berechnet wird. Die Gemischadaption erfolgt so, dass keine Lambdaabweichung mehr auftritt.

Es sei an dieser Stelle darauf hingewiesen, dass die Brennkraftmaschine 10 auch eine Lambdaregelung aufweisen kann, welche die Gemischzusammensetzung im Homogenbetrieb direkt auf den gewünschten Wert regelt. In diesem Fall kann für die Gemischadaption eine Regelgröße der Lambdaregelung verwendet werden. Die Gemischadaption erfolgt so, dass die Regelgröße auf Dauer in etwa zu Null wird. Ferner erfolgt üblicherweise eine Adaption des Verlustmoments und/oder ggf. eine Prüfung, ob die Adaption des Verlustmoments sich in eingeschwungenem Zustand befindet. Dies ist in Figur 3 allerdings nicht dargestellt.

In einem Block 62 wird die Brennkraftmaschine 10 anschließend wieder im Leerlauf im Schichtbetrieb S1 betrieben. In diesem Betriebszustand der Brennkraftmaschine wird der integrale Anteil I des PI-Reglers 52 (vgl. Fig. 2) überwacht. Ist dieser ungleich null, wird dies aus den oben angegebenen Gründen als Kraftstofffehler interpretiert. Ein solcher bedeutet, dass die tatsächliche Kraftstoffmenge K_ist im Brennraum 12 der Brennkraftmaschine 10 nicht der geplanten bzw. berechneten Kraftstoffmenge K_soll entspricht. Abhängig von dem Wert der Regelgröße I wird nun im Block 54 (vgl. auch Figur 2) die Gemischadaption des Kraftstofffehlers durchgeführt. Bei dieser wird ebenfalls die Steigung und der Offset einer Beziehung beeinflusst, mit der die Kraftstoffmenge berechnet wird. Die Beeinflussung erfolgt so, dass die Regelgröße I ungefähr gleich null wird.

Anschließend wird die Brennkraftmaschine 10 wieder im Leerlauf im Homogenbetrieb H2 betrieben (Block 64) und analog zum obigen Block 58 die Lambdaabweichung überwacht. Anschließend erfolgt im Block 66 wieder eine Gemischadaption des Luftfüllungsfehlers. Die Gemischadaption kann beliebig oft im Wechsel durchgeführt werden. Das Programm endet im Block 68.

Mit dem beschriebenen Verfahren ist es möglich, bei der Gemischadaption zwischen einem Luftfüllungsfehler und einem Kraftstofffehler zu unterscheiden. Dadurch ist es möglich, eine Gemischadaption durchzuführen, die individuell auf die einzelnen Betriebsarten der Brennkraftmaschine, also den Homogenbetrieb und den Schichtbetrieb, zugeschnitten ist. Vor allem wird vermieden, dass eine im Homogenbetrieb aufgrund eines Luftfüllungsfehlers durchgeführte Gemischadaption ohne weiteres auf den Schichtbetrieb übertragen wird, in dem ein solcher Luftfüllungsfehler keine oder nur eine geringe Rolle spielt und daher die Übernahme der Gemischadaption zu einer falschen Kraftstoffmasse und zu einem Momentenfehler führen würde. Die Durchführung des in Figur 3 beschriebenen Verfahrens jeweils im Leerlauf der Brennkraftmaschine 10 bietet sich an, da in diesem Betriebszustand der Brennkraftmaschine 10 im Allgemeinen nach einer kurzen Einschwingzeit konstante Bedingungen vorgefunden werden.

Es versteht sich, dass die obige Gemischadaption um so genauer wird, je öfter im Wechsel eine Gemischadaption des Luftfüllungsfehlers im Homogenbetrieb, anschließend eine Gemischadaption des Kraftstofffehlers im Schichtbetrieb, anschließend wieder eine Gemischadaption des Luftfüllungsfehlers im Homogenbetrieb, usw., durchgeführt wird. Dabei ist es nicht erforderlich, dass die einzelnen Gemischadaptionen zeitlich unmittelbar aufeinander folgen. Eine Gemischadaption kann jedes Mal dann durchgeführt werden, wenn das Kraftfahrzeug während einer bestimmten Zeitdauer, typischerweise ungefähr 5 Sekunden, im Leerlauf betrieben wird. Die entsprechenden Werte werden dann gespeichert und für die nachfolgende Gemischadaption während der nächsten Leerlaufphase wieder verwendet.

Bei dem obigen Ausführungsbeispiel erfolgte die Gemischadaption im Schichtbetrieb nur indirekt durch einen Vergleich der Ist-Drehzahl und der Soll-Drehzahl, da letztlich für die Gemischadaption die Regelgröße der Drehzahlregelung herangezogen wurde. Möglich ist es jedoch auch, die Gemischadaption direkt auf einer Drehzahldifferenz basieren zu lassen.

## Patentansprüche

1. Verfahren zum Betreiben einer Brennkraftmaschine (10), bei dem der Kraftstoff direkt in einen Brennraum (12) eingespritzt und mindestens zeitweise ein Schichtbetrieb (S1) durchgeführt wird, **dadurch gekennzeichnet, dass** im Schichtbetrieb (S1) nach einer Einschwingzeit eine Differenz zwischen einer Ist-Drehzahl (n_ist) und einer Soll-Drehzahl (n_soll) erfasst und eine Gemischadaption (54) abhängig von dieser Differenz indirekt oder direkt durchgeführt wird.

2. Verfahren nach Anspruch 1, **dadurch gekennzeichnet, dass** die Gemischadaption (54) im Schichtbetrieb (S1) indirekt, nämlich abhängig von einer Regelgröße (I) einer Drehzahlregelung (52), erfolgt.

3. Verfahren nach Anspruch 2, **dadurch gekennzeichnet, dass** die Gemischadaption (54) im Schichtbetrieb (S1) indirekt, nämlich abhängig von einem I-Anteil (I) eines PI-Reglers (52) zur Drehzahlregelung, erfolgt.

4. Verfahren nach Anspruch 1, **dadurch gekennzeichnet, dass** die Gemischadaption im Schichtbetrieb direkt, nämlich abhängig von einer tatsächlichen Drehzahldifferenz, erfolgt.

5. Verfahren nach einem der vorhergehenden Ansprüche, **dadurch gekennzeichnet, dass** die Drehzahldifferenz bzw. die Regelgröße (I) als Kraftstofffehler (62) interpretiert wird.

6. Verfahren nach Anspruch 5, **dadurch gekennzeichnet, dass** aus der Drehzahldifferenz bzw. der Regelgröße (I) eine Korrekturgröße für die Ermittlung der Kraftstoffmenge bestimmt wird.

7. Verfahren nach einem der vorhergehenden Ansprüche, **dadurch gekennzeichnet, dass** zeitweise auch ein Homogenbetrieb (H1, H2) durchgeführt und im Homogenbetrieb (H1, H2) bei einer Lambdaabweichung (λ_ist, λ_soll) eine Gemischadaption (60, 66) durchgeführt wird, wobei die Lambdaabweichung (λ_ist, λ_soll) im Homogenbetrieb (H1, H2) als Luftfüllungsfehler (64) interpretiert wird.

8. Verfahren nach Anspruch 7, **dadurch gekennzeichnet, dass** aus der Lambdaabweichung (λ_ist, λ_soll) eine Korrekturgröße für die Ermittlung der Luftmenge bestimmt wird.

9. Verfahren nach einem der Ansprüche 7 oder 8, **dadurch gekennzeichnet, dass** abwechselnd im Sinne einer iterativen Schleife eine Gemischadaption (60, 66) im Homogenbetrieb (H1, H2) und eine Gemischadaption (54) im Schichtbetrieb (S1) durchgeführt wird.

10. Verfahren nach einem der vorhergehenden Ansprüche, **dadurch gekennzeichnet, dass** es sich bei der Soll-Drehzahl (n_soll) um eine Leerlaufdrehzahl handelt.

11. Verfahren nach einem der vorhergehenden Ansprüche, **dadurch gekennzeichnet, dass** die Gemischadaption (54, 60, 66) eine Steigung und/oder einen Offset einer Beziehung beeinflusst, mit der die Kraftstoffmenge und/oder die Luftmenge bestimmt werden.

12. Verfahren nach einem der vorhergehenden Ansprüche, dass die Korrektur im Schichtbetrieb eine Adaption eines Verlustmoments umfasst.

13. Computerprogramm, **dadurch gekennzeichnet, dass** es zur Durchführung des Verfahrens nach einem der vorhergehenden Ansprüche geeignet ist, wenn es auf einem Computer ausgeführt wird.

14. Computerprogramm nach Anspruch 13, **dadurch gekennzeichnet, dass** es auf einem Speicher, insbesondere auf einem Flash-Memory, abgespeichert ist.

15. Steuer- und/oder Regelgerät (46) zum Betreiben einer Brennkraftmaschine (10) insbesondere eines Kraftfahrzeugs, bei der der Kraftstoff direkt in einen Brennraum (12) eingespritzt und mindestens zeitweise ein Schichtbetrieb (S1) durchgeführt wird, **dadurch gekennzeichnet, dass** es zur Steuerung und/oder Regelung des Verfahrens nach einem der Ansprüche 1 bis 12 geeignet ist.

16. Steuer- und/oder Regelgerät (46) nach Anspruch 15, **dadurch gekennzeichnet, dass** es mit einem Computerprogramm nach einem der Ansprüche 11 oder 12 versehen ist.

17. Brennkraftmaschine (10) mit mindestens einem Brennraum (12), mit einer Einrichtung (14), welche den Kraftstoff direkt in den Brennraum (12) einspritzt, mit einer Einrichtung (44), mit der die Gemischzusammensetzung des Kraftstoff-Luftgemisches ermittelt werden kann, und mit einer Einrichtung (40) zur Erfassung der Drehzahl der Brennkraftmaschine (10), **dadurch gekennzeichnet, dass** sie mit einem Steuer- und/oder Regelgerät (46) nach einem der Ansprüche 15 oder 16 versehen ist.

18. Verfahren nach Anspruch 5, **dadurch gekennzeichnet, dass** aus der Drehzahldifferenz bzw. der Regelgröße (I) eine Korrekturgröße für die Ansteuerspannung von Piezo-Hochdruckeinspritzventilen bestimmt wird.
